# EUROPÄISCHE PATENTANMELDUNG

(11) **EP 0 904 973 A2**
(43) Veröffentlichungstag der Anmeldung: **31.03.1999**
(21) Anmeldenummer: 98117844.5
(22) Anmeldetag: 21.09.1998
(51) Int. Cl.: B60L 9/30

(54) **Betriebsverfahren für ein Stromsystem eines Schienenfahrzeugs**

(30) Priorität: 26.09.1997 DE 19742623
(71) Anmelder: SIEMENS AKTIENGESELLSCHAFT, 80333 München (DE)
(72) Erfinder: Kramer, Hagen, Dipl.-Ing., 91056 Erlangen (DE); Laska, Bernd, Dr., Dipl.-Ing., 91074 Herzogenaurach (DE); Sperr, Franz, Dipl.-Ing., 90763 Fürth (DE)

(57) **Zusammenfassung**

Die vorliegende Erfindung betrifft ein Betriebsverfahren für ein Stromsystem eines Schienenfahrzeugs, das Traktionsantriebe (15) und Hilfsaggregate aufweist und über mindestens einen Stromabnehmer (2') aus einem externen Stromnetz (1') mit Gleich- oder Wechselstrom versorgt wird, wobei im Gleichstrombetrieb
- von dem mindestens einen Stromabnehmer (2') Gleichstrom in einen Traktions-Gleichspannungskreis (13) eingespeist und von dort zu einem ersten Teil an die Traktionsantriebe (15) weitergeleitet wird,
- der in den Traktions-Gleichspannungskreis (13) eingespeiste Gleichstrom zu einem zweiten Teil über einen Traktions-Eingangsstromrichter (12) als Wechselstrom in eine Traktions-Unterspannungswicklung (10) eines Traktionstransformators (9) eingespeist wird, dort in einer im Wechselstrombetrieb über den Stromabnehmer (2') oder einen weiteren Stromabnehmer (2) aus dem externen Stromnetz (1') gespeisten Oberspannungswicklung (8) des Traktionstransformators (9) eine Spannung induziert und in einer Hilfs-Unterspannungswicklung (11) einen Hilfsstrom induziert,
- wobei der in der Hilfs-Unterspannungswicklung (11) induzierte Hilfsstrom den Hilfsaggregaten zu ihrer Versorgung mit elektrischer Energie zugeführt wird.

## Beschreibung

Die vorliegende Erfindung betrifft ein Betriebsverfahren für ein Stromsystem eines Schienenfahrzeugs, das Traktionsantriebe und Hilfsaggregate aufweist und über mindestens einen Stromabnehmer aus einem externen Stromnetz mit Gleich- oder Wechselstrom versorgt wird, wobei im Gleichstrombetrieb von mindestens einem Stromabnehmer Gleichstrom in einen Traktions-Gleichspannungskreis eingespeist und von dort zu einem ersten Teil an die Traktionsantriebe weitergeleitet wird, wobei der in den Traktions-Gleichspannungskreis eingespeiste Gleichstrom zu einem zweiten Teil über einen Wechselrichter als Wechselstrom in eine Primärwicklung eines Transformators eingespeist wird, dort in einer Sekundärwicklung des Transformators einen Sekundärstrom induziert, der den Hilfsaggregaten zu ihrer Versorgung mit elektrischer Energie als Hilfsstrom zugeführt wird.

Mit 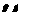 Schienenfahrzeug" kann dabei sowohl eine Lokomotive als auch ein Triebzug mit einem oder mehreren Triebköpfen oder ein Triebzug mit über der Zuglänge verteilten Traktionsantrieben gemeint sein. Unter 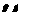 Gleichstrombetrieb" ist zu verstehen, daß das Schienenfahrzeug aus dem externen Stromnetz mit Gleichstrom versorgt wird, unter 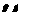 Wechselstrombetrieb", daß das Schienenfahrzeug aus dem externen Stromnetz mit Wechselstrom versorgt wird. Als 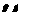 Hilfsaggregate" werden alle mit elektrischer Energie zu versorgenden Aggregate außer den Traktions- oder Hauptantrieben bezeichnet, also z.B. Ölpumpen, Wasserpumpen, Lüfter, Klimaanlagen usw. Unter 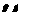 induzierter Strom" ist der Strom zu verstehen, der in einem Stromkreis fließt, wenn in einer an den Stromkreis angeschlossenen Transformatorwicklung eine Spannung induziert wird.

Ein Mehrsystem-Schienenfahrzeug wird im der Erfindung zugrunde liegenden Stand der Technik im Wechselstrombetrieb wie folgt betrieben: Der Wechselstrom wird über den Stromabnehmer in eine Oberspannungswicklung eines Traktionstransformators eingespeist. An die Oberspannungswicklung sind mindestens eine Traktions-Unterspannungswicklung und mindestens eine Hilfs-Unterspannungswicklung transformatorisch angekoppelt. Ein erster Teil des in die Oberspannungswicklung eingespeisten Stromes induziert in der Traktions-Unterspannungswicklung einen Traktions-Sekundärstrom, der von einem Traktions-Eingangsstromrichter gleichgerichtet, von dort in einen Traktions-Gleichspannungskreis eingespeist und von dort an die Traktionsantriebe weitergeleitet wird. Ein zweiter Teil des in die Oberspannungswicklung eingespeisten Stromes induziert in der Hilfs-Unterspannungswicklung einen Hilfsstrom, der den Hilfsaggregaten zu deren Versorgung mit elektrischer Energie zugeführt wird. Der Traktions-Eingangsstromrichter ist vorzugsweise als Traktions-Vierquadrantensteller in Zweipunkttechnik oder in Mehrpunkttechnik ausgebildet.

Bei Gleichstrombetrieb wird im der Erfindung zugrunde liegenden Stand der Technik der Gleichstrom über den gleichen oder einen anderen Stromabnehmer in den Traktions-Gleichspannungskreis eingespeist und ein erster Teil von dort an die Traktionsantriebe weitergeleitet. Ein zweiter Teil wird über einen Hilfsstromrichter als Hilfsstrom den Hilfsaggregaten zu ihrer Versorgung mit elektrischer Energie zugeführt. Falls die Versorgung der Hilfsaggregate mit elektrischer Energie potentialgetrennt erfolgen soll, wird der zweite Teil des eingespeisten Stromes als Wechselstrom in eine Primärwicklung eines Transformators eingespeist und induziert dadurch in einer Sekundärwicklung dieses Transformators einen Sekundärstrom, der dann den Hilfsaggregaten zu ihrer Versorgung mit elektrischer Energie zugeführt wird.

Je nach Ausführungsform können die im Wechselstrombetrieb benützten Umrichter auch im Gleichstrombetrieb benützt werden. In jedem Fall aber wird zur potentialgetrennten Energieversorgung der Hilfsaggregate im Stand der Technik mindestens ein zusätzlicher Transformator benötigt.

Aus der DE-Z. 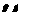 ABB-Technik", Heft 4/92, Seiten 15 - 22, ist ein Betriebsverfahren für ein Stromsystem eines Schienenfahrzeugs, das Traktionsantriebe und Hilfsaggregate aufweist und über mindestens einen Stromabnehmer aus einem externen Stromnetz mit Gleich- oder Wechselstrom versorgt wird, bekannt. Bei dem dort beschriebenen Verfahren wird im Gleichstrombetrieb von dem mindestens einem Stromabnehmer Gleichstrom in einen Traktions-Gleichspannungskreis eingespeist und von dort zu einem ersten Teil an die Traktionsantriebe weitergeleitet und zu einem zweiten Teil über einen Wechselrichter den Hilfsaggregaten zu ihrer Versorgung mit elektrischer Energie als Hilfsstrom zugeführt.

Die Aufgabe der vorliegenden Erfindung besteht darin, ein Betriebsverfahren für ein Stromsystem eines Schienenfahrzeugs zur Verfügung zu stellen, das im Gleichstrombetrieb eine potentialgetrennte Energieversorgung der Hilfsaggregate gewährleistet, ohne einen zusätzlichen Transformator zu benötigen.

Die Aufgabe wird dadurch gelöst, daß der zweite Teil des in den Traktions-Gleichspannungskreis eingespeisten Gleichstromes über einen Traktions-Eingangsstromrichter als Wechselstrom in eine Traktions-Unterspannungswicklung eines Traktionstransformators eingespeist wird, dort in einer im Wechselstrombetrieb über den Stromabnehmer oder einen weiteren Stromabnehmer aus dem externen Stromnetz gespeisten Oberspannungswicklung des Traktionstransformators eine Spannung und in einer Hilfs-Unterspannungswicklung einen Hilfsstrom induziert, der den Hilfsaggregaten zu deren Versorgung mit elektrischer Energie zugeführt wird.

Bei dem Betriebsverfahren nach Anspruch 1 wird im Gleichstrombetrieb der Traktionstransformator zur Potentialtrennung benutzt. Damit wird für die potentialgetrennte Energieversorgung der Hilfsaggregate kein zusätzlicher Transformator benötigt. Dies bietet Vorteile bezüglich Kosten, Gewicht und Einbauraum.

In der Oberspannungswicklung wird zunächst nur eine Spannung induziert. Ob in der Oberspannungswicklung auch ein Strom induziert wird, hängt davon ab, ob an die Oberspannungswicklung ein Stromkreis angeschlossen ist. Wenn die Oberspannungswicklung des Traktionstransformators im Gleichstrombetrieb nicht beschaltet, also offen, ist, können durch den Pulsbetrieb des Traktions-Eingangsstromrichters (und ggf. weiterer Stromrichter) hohe Spannungsspitzen an der Oberspannungswicklung des Traktionstransformators auftreten. Nun kann die Oberspannungswicklung zwar derart ausgelegt werden, daß sie diese Spannungsspitzen verkraftet. Günstiger ist es aber, wenn die in der Oberspannungswicklung induzierte Spannung in mindestens einer Schutzbeschaltung einen Stromfluß bewirkt, so daß die an der Oberspannungswicklung auftretenden Spannungsspitzen reduziert werden. Dementsprechend ist ein erfindungsgemäßes Stromsystem dadurch gekennzeichnet, daß der Traktionstransformator mindestens eine Schutzbeschaltung aufweist, die im Wechselstrombetrieb zumindest einseitig von der Transformatorwicklung trennbar ist.

Die Schutzbeschaltung besteht aus mindestens einem Kondensator oder mindestens einem linearen oder nichtlinearen Widerstand (z. B. Überspannungsableiter). Kombinationen der drei Bauteiltypen sind möglich. Eine Schutzbeschaltung kann vollständig innerhalb oder teilweise innerhalb oder außerhalb des Transformatorgehäuses untergebracht sein. Die Trennbarkeit der Schutzbeschaltung im Wechselstrombetrieb kann erforderlich sein, da wegen der geringen Impedanz der Schutzbeschaltung bei oberschwingungsbehafteten Netzspannungen erhöhte Oberschwingungsströme und/oder Verluste in der Schutzbeschaltung auftreten können.

Die Schutzbeschaltung kann dabei wahlweise mit der Oberspannungswicklung oder mit einer transformatorisch an die Oberspannungswicklung gekoppelten Zusatzwicklung einen geschlossenen Stromkreis bilden. Auch die kumulative Realisierung beider Alternativen ist möglich. Die Zusatzwicklung kann eine speziell für die Reduzierung der Spannungsspitzen vorgesehene und dementsprechend optimierte Wicklung oder eine sowieso vorhandene, im Gleichstrombetrieb nicht genutzte Wicklung, z.B. eine weitere Traktions-Unterspannungswicklung, sein.

Falls zwei oder mehr Stromsysteme auf dem Schienenfahrzeug installiert sind, können im Gleichstrombetrieb die Oberspannungswicklungen der Traktionstransformatoren der Stromsysteme elektrisch leitend miteinander verbunden werden. Hierdurch ist es möglich, die in der Oberspannungswicklung des Traktionstransformators eines Stromsystems induzierte Spannung der Oberspannungswicklung des Traktionstransformators eines weiteren Stromsystems zuzuführen und dort in einer Hilfs-Unterspannungswicklung einen Hilfsstrom zu induzieren, der Hilfsaggregaten des weiteren Stromsystems zu ihrer Versorgung mit elektrischer Energie zugeführt wird. Dies ist besonders dann vorteilhaft, wenn die Versorgung der Hilfsaggregate des weiteren Stromsystems über dessen Traktions-Eingangsstromrichter nicht möglich ist, z.B. wegen einer Störung in dessen Traktions-Gleichspannungskreis.

Weitere Vorteile und Einzelheiten ergeben sich aus der nachfolgenden Beschreibung eines Ausführungsbeispiels. Dabei zeigen:
- FIG 1: ein Blockschaltbild eines Stromsystems eines Schienenfahrzeugs und
- FIG 2: ein Gesamtsystem, bestehend aus zwei Stromsystemen.

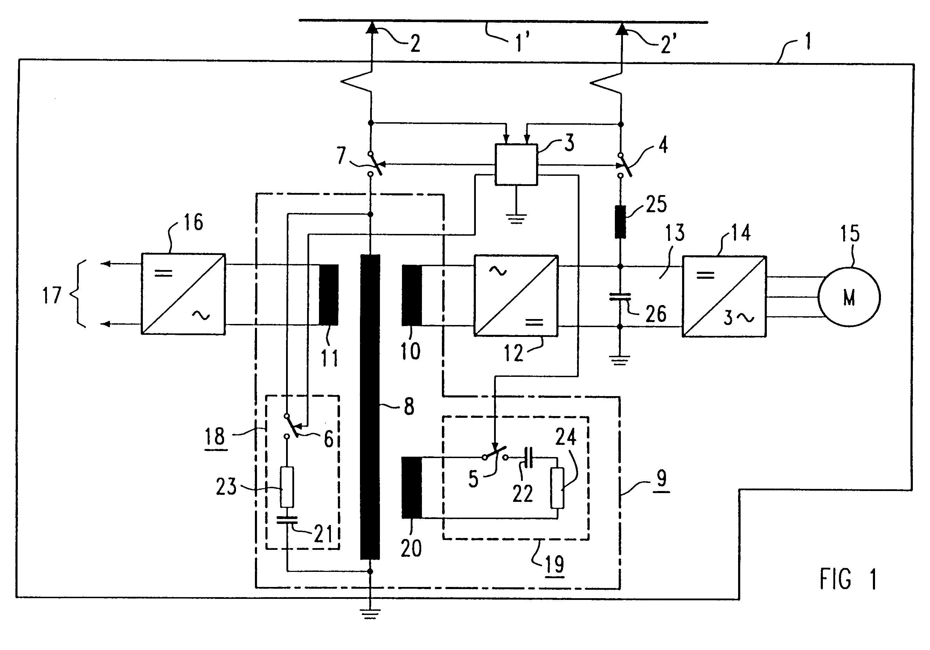

Gemäß FIG 1 weist ein Stromsystem 1 eines Schienenfahrzeugs zwei Stromabnehmer 2,2' auf, von denen aus das Schienenfahrzeug alternativ mit Strom versorgt wird. Die Stromabnehmer 2,2' sind mit einem externen Stromnetz 1' (bzw. einem Fahrdraht 1') verbindbar, der Gleich- oder Wechselspannung führen kann.

Die Stromabnehmer 2,2' sind, wie allgemein bei Elektrolokomotiven bekannt, vom jeweiligen Fahrdraht 1' trennbar, wobei zu einem bestimmten Zeitpunkt selbstverständlich nur einer der Stromabnehmer 2,2' am Fahrdraht 1' anliegt, nämlich im Wechselstrombetrieb, d.h. wenn der Fahrdraht 1' Wechselspannung führt, der Stromabnehmer 2 und im Gleichstrombetrieb, d.h. wenn der Fahrdraht 1' Gleichspannung führt, der Stromabnehmer 2'.

Beim Übergang in den Gleichstrombetrieb werden die Schalter 4, 5 und 6 geschlossen und der Schalter 7 geöffnet. Beim Übergang in den Wechselstrombetrieb werden die Schalter 4, 5 und 6 geöffnet und der Schalter 7 geschlossen. Ob der Fahrdraht 1' Gleichspannung oder Wechselspannung führt, wird im dargestellten Ausführungsbeispiel durch einen Netzspannungsdetektor 3 detektiert.

Im folgenden wird zunächst der Wechselstrombetrieb erläutert. In diesem Fall wird der über den Stromabnehmer 2 eingespeiste Strom zunächst einer Oberspannungswicklung 8 eines Traktionstransformators 9 zugeführt, an die eine Traktions-Unterspannungswicklung 10 und eine Hilfs-Unterspannungswicklung 11 transformatorisch angekoppelt sind. Von der Oberspannungswicklung 8 fließt der Strom weiter über sogenannte Raderdkontakte auf Erde.

Ein erster Teil des in die Oberspannungswicklung 8 eingespeisten Stromes induziert in der Traktions-Unterspannungswicklung 10 einen Traktions-Sekundärstrom, der von einem Traktions-Eingangsstromrichter 12, der als Traktions-Vierquadrantensteller ausgebildet ist, gleichgerichtet und in einen Traktions-Gleichspannungskreis 13 eingespeist wird. Von dort wird der gleichgerichtete Traktions-Sekundärstrom einem Traktions-Pulswechselrichter 14 zugeführt, der den Traktions-Sekundärstrom in Dreiphasen-Wechselstrom (Drehstrom) umwandelt und ihn an Traktionsantriebe 15 weiterleitet, die als drehzahlveränderliche Drehstrommotoren 15 ausgebildet sind.

Ein zweiter Teil des in die Oberspannungswicklung 8 eingespeisten Stromes induziert in der Hilfs-Unterspannungswicklung 11 einen Hilfsstrom, der von einem Hilfs-Stromrichter 16 gleichgerichtet und in einen Hilfs-Gleichspannungskreis 17 eingespeist und von dort den Hilfsaggregaten zu ihrer Versorgung mit elektrischer Energie zugeführt wird. Die Hilfsaggregate sind der besseren Übersichtlichkeit halber nicht dargestellt. Alternativ oder parallel sind die Hilfsaggregate - je nach deren Auslegung - gegebenenfalls auch mit Wechselstrom versorgbar. In diesem Fall kann der Hilfs-Stromrichter 16 selbstverständlich entfallen.

Die Schutzbeschaltungen 18, 19 sind im Wechselstrombetrieb einseitig von der Oberspannungswicklung 8 bzw. von einer Zusatzwicklung 20 elektrisch getrennt, da die Schalter 5 und 6 im Wechselstrombetrieb geöffnet sind. Sie bilden daher keine geschlossenen Stromkreise mit der Oberspannungswicklung 8 bzw. der Zusatzwicklung 20.

Im Wechselstrombetrieb arbeitet das Stromsystem 1 also wie auch im Stand der Technik bekannt. Der entscheidende Unterschied zeigt sich im Gleichstrombetrieb, der nachfolgend beschrieben wird.

Ebenso wie im der Erfindung zugrunde liegenden Stand der Technik wird im Gleichstrombetrieb der Gleichstrom über den Stromabnehmer 2' und eine Netzfilterdrossel 25 in den Traktions-Gleichspannungskreis 13 eingespeist. Ein Kondensator 26 dient als Stützkondensator für den Traktions-Gleichspannungskreis 13. Von dort wird ein erster Teil des in den Traktions-Gleichspannungskreis 13 eingespeisten Stromes dem Traktions-Pulswechselrichter 14 zugeführt, der diesen Strom in Drehstrom umwandelt und ihn an die Traktionsantriebe 15 weiterleitet. Der eigentliche Unterschied liegt in der Versorgung des Hilfs-Gleichspannungskreises 17.

Zur Versorgung des Hilfs-Gleichspannungskreises 17 wird ein zweiter Teil des in den Traktions-Gleichspannungskreis 13 eingespeisten Stromes über den Traktions-Vierquadrantensteller 12 als Wechselstrom in die Traktions-Unterspannungswicklung 10 des Traktionstransformators 9 eingespeist und induziert in der Oberspannungswicklung 8 des Traktionstransformators 9 eine Spannung und in der Hilfs-Unterspannungswicklung 11 einen Hilfsstrom. Das Gleichrichten und Weiterleiten dieses Hilfsstromes an die Hilfsaggregate geschieht dann ebenso wie im Wechselstrombetrieb des Stromsystems 1.

Der Traktions-Vierquadrantensteller 12 erzeugt an der Traktions-Unterspannungswicklung 10 eine gepulste Wechselspannung, wobei die Pulsfrequenz des Traktions-Vierquadrantenstellers 12 größer als die Grundfrequenz der Wechselspannung ist. Die Form dieser Wechselspannung wird z. B. durch sinusförmige oder trapezförmige Modulation erzeugt. Durch Schutzbeschaltungen 18, 19 werden die durch den Pulsbetrieb des Traktions-Vierquadrantenstellers 12 erzeugten Spannungsoberschwingungen an der Oberspannungswicklung 8 des Traktionstransformators 9 bedämpft.

Üblicherweise werden im Traktions-Vierquadrantensteller 12 gesteuerte Halbleiterventile sogenannte GTO-Thyristoren oder IGB-Transistoren verwendet.

Im Gleichstrombetrieb ist der Schalter 7 geöffnet, die Schalter 4, 5 und 6 sind hingegen geschlossen. Die Schutzbeschaltung 18 bildet daher einen geschlossenen Stromkreis mit der Oberspannungswicklung 8, die Schutzbeschaltung 19 einen geschlossenen Stromkreis mit der Zusatzwicklung 20, wobei die Zusatzwicklung 20 transformatorisch an die Oberspannungswicklung 8 angekoppelt ist. Folglich bewirkt die in der Oberspannungswicklung 8 induzierte Spannung in der Schutzbeschaltung 18 einen Stromfluß. Ebenso wird in der Zusatzwicklung 20 ein Zusatzstrom erzeugt, der die Schutzbeschaltung 19 durchfließt.

Die Schutzbeschaltungen 18, 19 weisen jeweils einen Kondensator 21, 22 und einen Widerstand 23, 24 auf. Die Schutzbeschaltungen 18, 19 dienen der Reduzierung von Spannungsspitzen, die im Gleichstrombetrieb in der Oberspannungswicklung 8 ohne Schutzbeschaltung auftreten würden. Bei der Schutzbeschaltung 19 geschieht die Reduzierung der Spannungsspitzen dadurch, daß die in der Zusatzwicklung 20 induzierte Spannung einen Zusatzstrom erzeugt und dieser Zusatzstrom mittels der Schutzbeschaltung 19 die Spannungsspitzen reduziert. Die Reduzierung der Spannungsspitzen geschieht vorzugsweise durch Glättung.

Bei dem obenstehend beschriebenen Stromsystem 1 ist jederzeit ein Wechsel von Wechselstrombetrieb zu Gleichstrombetrieb und umgekehrt möglich. Beim Wechsel auf Wechselstrombetrieb wird der Traktions-Gleichspannungskreis 13 von dem Fahrdraht 1' und die Schutzbeschaltungen 18,19 zu diesem Zeitpunkt von der Oberspannungswicklung 8 durch Öffnen des Schalters 6 bzw. von der Zusatzwicklung 20 durch Öffnen des Schalters 5 elektrisch getrennt.

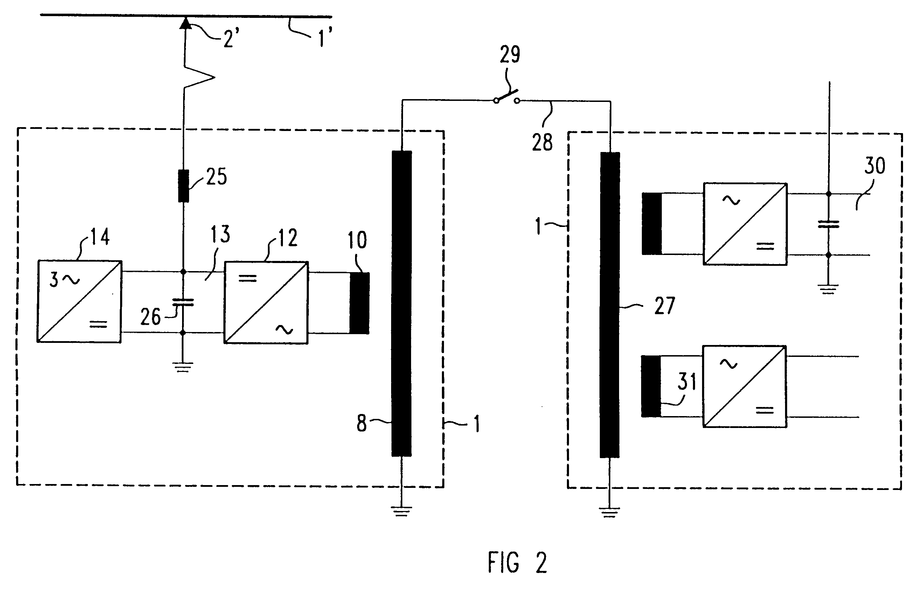

FIG 2 zeigt nun eine weitere Ausführungsform der vorliegenden Erfindung, bei der zwei voneinander unabhängige Stromsysteme 1 vorhanden sind. Die beiden Stromsysteme sind vollständig wie in FIG 1 ausgebildet. Die Einzelheiten der beiden Stromsysteme 1 sind in FIG 2 aber nur insoweit dargestellt wie dies zum Verständnis der Erfindung notwendig ist.

Gemäß FIG 2 sind die beiden Oberspannungswicklungen 8, 27 der beiden Stromsysteme 1 über eine Hochspannungsleitung 28 und einen Schalter 29 elektrisch leitend miteinander verbindbar.

Im Gleichstrombetrieb ist der Schalter 29 im Regelfall geöffnet. Wenn aber in dem Traktions-Gleichspannungskreis 30 des in FIG 2 rechts dargestellten Stromkreises 1 z. B. eine Störung auftritt, durch die der Hilfs-Unterspannungswicklung 31 dieses Stromsystems 1 von diesem Traktions-Gleichspannungskreis 30 keine Energie mehr zugeführt werden kann, wird der Schalter 29 geschlossen. So kann dann die in der Oberspannungswicklung 8 des in FIG 2 links dargestellten Stromsystems 1 induzierte Spannung der Oberspannungswicklung 27 des in FIG 2 rechts dargestellten Stromsystems 1 zugeführt werden und dort in der Hilfs-Unterspannungswicklung 31 einen Hilfsstrom induzieren, der Hilfsaggregaten des weiteren Stromsystems zu ihrer Versorgung mit elektrischer Energie zugeführt werden kann. Die Stromversorgung der Hilfsaggregate des in FIG 2 rechts dargestellten Stromsystems bleibt also auch in diesem Fall aufrechterhalten.

## Patentansprüche

1. Betriebsverfahren für ein Stromsystem eines Schienenfahrzeugs, das Traktionsantriebe (15) und Hilfsaggregate aufweist und über mindestens einen Stromabnehmer (2') aus einem externen Stromnetz (1') mit Gleich- oder Wechselstrom versorgt wird, wobei im Gleichstrombetrieb
- von dem mindestens einen Stromabnehmer (2') Gleichstrom in einen Traktions-Gleichspannungskreis (13) eingespeist und von dort zu einem ersten Teil an die Traktionsantriebe (15) weitergeleitet wird,
- der in den Traktions-Gleichspannungskreis (13) eingespeiste Gleichstrom zu einem zweiten Teil über einen Traktions-Eingangsstromrichter (12) als Wechselstrom in eine Traktions-Unterspannungswicklung (10) eines Traktionstransformators (9) eingespeist wird, dort in einer im Wechselstrombetrieb über den Stromabnehmer (2') oder einen weiteren Stromabnehmer (2) aus dem externen Stromnetz (1') gespeisten Oberspannungswicklung (8) des Traktionstransformators (9) eine Spannung induziert und in einer Hilfs-Unterspannungswicklung (11) einen Hilfsstrom induziert,
- wobei der in der Hilfs-Unterspannungswicklung (11) induzierte Hilfsstrom den Hilfsaggregaten zu ihrer Versorgung mit elektrischer Energie zugeführt wird.

2. Betriebsverfahren nach Anspruch 1,
**dadurch gekennzeichnet**,
daß die in der Oberspannungswicklung (8) induzierte Spannung in mindestens einer Schutzbeschaltung (18) einen Stromfluß bewirkt.

3. Betriebsverfahren nach Anspruch 1 oder 2,
**dadurch gekennzeichnet**,
daß in einer transformatorisch an die Oberspannungswicklung (8) gekoppelten Zusatzwicklung (20) ein Zusatzstrom erzeugt wird und daß dieser Zusatzstrom eine Schutzbeschaltung (19) durchfließt.

4. Betriebsverfahren nach einem der Ansprüche 1 bis 3,
**dadurch gekennzeichnet**,
daß durch den Traktions-Eingangsstromrichter (12) an der Traktions-Unterspannungswicklung (10) eine gepulste Wechselspannung erzeugt wird und daß die Pulsfrequenz des Traktions-Eingangsstromrichters (12) größer ist als die Grundfrequenz der Wechselspannung an der Traktions-Unterspannungswicklung (10).

5. Betriebsverfahren nach einem der Ansprüche 1 bis 4,
**dadurch gekennzeichnet**,
- daß beim Wechsel auf Wechselstrombetrieb der Traktions-Gleichspannungskreis (13) von dem Stromnetz (1') getrennt wird und von dem mindestens einen Stromabnehmer (2') oder dem weiteren Stromabnehmer (2) Einphasen-Wechselstrom in die Oberspannungswicklung (8) eingespeist wird,
- daß der in die Oberspannungswicklung (8) eingespeiste Einphasen-Wechselstrom zu einem ersten Teil in der Traktions-Unterspannungswicklung (10) einen Traktions-Sekundärstrom induziert, der von dem Traktions Eingangsstromrichter (12) gleichgerichtet, in den Traktions-Gleichspannungskreis (13) eingespeist und von dort an die Traktionsantriebe (15) weitergeleitet wird, und
- daß der in die Oberspannungswicklung (8) eingespeiste Einphasen-Wechselstrom zu einem zweiten Teil in der Hilfs-Unterspannungswicklung (11) den Hilfsstrom induziert, der den Hilfsaggregaten zu deren Versorgung mit elektrischer Energie zugeführt wird.

6. Betriebsverfahren nach Anspruch 5 und einem der Ansprüche 2 bis 4,
**dadurch gekennzeichnet**,
daß beim Wechsel in den Wechselstrombetrieb die mindestens eine Schutzbeschaltung (18,19) von der Oberspannungswicklung (8) bzw. von der Zusatzwicklung (20) zumindest einseitig elektrisch getrennt wird.

7. Betriebsverfahren nach einem der Ansprüche 1 bis 6,
**dadurch gekennzeichnet**,
daß im Gleichstrombetrieb die in der Oberspannungswicklung (8) induzierte Spannung einer Oberspannungswicklung (27) eines Traktionstransformators eines weiteren Stromsystems zugeführt wird und dort in einer Hilfs-Unterspannungswicklung (31) des weiteren Stromsystems einen Hilfsstrom induziert, der Hilfsaggregaten des weiteren Stromsystems zu ihrer Versorgung mit elektrischer Energie zugeführt wird.

8. Stromsystem eines Schienenfahrzeugs, das Traktionsantriebe (15), Hilfsaggregate und mindestens einen Stromabnehmer (2') aufweist,
- wobei der mindestens eine Stromabnehmer (2') mit einem Traktions-Gleichspannungskreis (13) verbindbar ist, der mit den Traktionsantrieben (15) verbunden ist,
- wobei der leichspannungskreis (13) mit einem Traktions-Eingangsstromrichter (12) verbunden ist, der mit einer Traktions-Unterspannungswicklung (10) eines Traktionstransformators (9) verbunden ist,
- wobei die Traktions-Unterspannungswicklung (10) transformatorisch an eine Oberspannungswicklung (8) des Traktionstransformators (9) und an eine Hilfs-Unterspannungswicklung (11) gekoppelt ist,
- wobei die Hilfs-Unterspannungswicklung (11) mit den Hilfsaggregaten verbunden ist,
- wobei der Traktionstransformator (9) zur Reduzierung von im Gleichstrombetrieb in der Oberspannungswicklung (8) auftretenden Spannungsspitzen mindestens eine Schutzbeschaltung (18,19) aufweist,
- wobei die Schutzbeschaltung (18,19) aus mindestens einem Kondensator (21,22) und/oder mindestens einem Widerstand (23,24) besteht,
**dadurch gekennzeichnet**,
- daß die Schutzbeschaltung (18,19) mittels eines Schalters (5,6) zumindest einseitig von der Oberspannungswicklung (8) bzw. einer Zusatzwicklung (20), die transformatorisch an die Oberspannungswicklung (8) angekoppelt ist, trennbar ist.

9. Stromsystem nach Anspruch 8,
**dadurch gekennzeichnet**,
daß die mindestens eine Schutzbeschaltung (18) mit der Oberspannungswicklung (8) einen geschlossenen Stromkreis bildet.

10. Stromsystem nach Anspruch 8,
**dadurch gekennzeichnet**,
daß eine Zusatzwicklung (20) des Traktionstransformators (9) transformatorisch an die Oberspannungswicklung (8) gekoppelt ist und daß die mindestens eine Schutzbeschaltung (19) mit der Zusatzwicklung (20) einen geschlossenen Stromkreis bildet.

11. Stromsystem nach Anspruch 8, 9 oder 10,
**dadurch gekennzeichnet**,
daß im Gleichstrombetrieb der mindestens eine Stromabnehmer (2') mit dem Traktions-Gleichspannungskreis (13) und im Wechselstrombetrieb der mindestens eine Stromabnehmer (2') oder ein weiterer Stromabnehmer (2) mit der Oberspannungswicklung (8) verbindbar ist.
